(19) Europäisches Patentamt
European Patent Office
Office européen des brevets

(11) **EP 2 100 160 B1**

(12) **FASCICULE DE BREVET EUROPEEN**

(45) Date de publication et mention de la délivrance du brevet:
**25.08.2010 Bulletin 2010/34**

(21) Numéro de dépôt: **07857557.8**

(22) Date de dépôt: **13.12.2007**

(51) Int Cl.:
***G01S 5/10*** *(2006.01)*

(86) Numéro de dépôt international:
**PCT/EP2007/063910**

(87) Numéro de publication internationale:
**WO 2008/071777 (19.06.2008 Gazette 2008/25)**

(54) **LOCALISATION PASSIVE ENSEMBLISTE EN MODES TOA/TDOA**

GLOBALE PASSIVE LOKALISIERUNG IM TOA/TDOA-MODUS

TOA/TDOA MODE GLOBAL PASSIVE LOCATION

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **15.12.2006 FR 0610961**

(43) Date de publication de la demande:
**16.09.2009 Bulletin 2009/38**

(73) Titulaire: **THALES**
**92200 Neuilly sur Seine (FR)**

(72) Inventeurs:
• **ALLAM, Sébastien**
**92160 Antony (FR)**

• **DE GRAMONT, Emmanuel**
**75017 Paris (FR)**

(74) Mandataire: **Lucas, Laurent Jacques**
**Marks & Clerk France**
**Conseils en Propriété Industrielle**
**Immeuble " Visium "**
**22, avenue Aristide Briand**
**94117 Arcueil Cedex (FR)**

(56) Documents cités:
**US-A- 5 327 144     US-A1- 2003 176 196**
**US-A1- 2005 148 346**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**DOMAINE DE L'INVENTION**

La présente invention concerne la résolution des problèmes liés à localisation passive de cibles en modes TOA (Time Of Arrival) ou TDOA (Time Difference Of Arrival).

Pour le TOA, l'invention permet de localiser une cible quelconque en exploitant les temps d'arrivée, sur un même récepteur, des ondes émises par un ou plusieurs émetteurs et réfléchies par la cible.

Pour le TDOA, l'invention permet de localiser une cible émettrice par mesure des différences de temps d'arrivée de l'onde émise sur plusieurs récepteurs synchronisés et dispersés dans l'espace.

La présente invention concerne plus particulièrement (mais non exclusivement) le domaine des radars passifs.

La présente invention, de par son caractère générique, permet d'adresser également toutes les combinaisons de mode (Multi-TOA, Multi-TDOA, ou encore Mixte TOA/TDOA).

**CONTEXTE DE L'INVENTION - ART ANTERIEUR**

Les méthodes de localisation passive, que ce soit en mode TOA ou TDOA, ont pour principe de base de déterminer le positionnement de cibles en utilisant les informations fournies simultanément par différentes sources d'informations.

En mode TOA ou mode "Time Of Arrival" selon la dénomination anglo-saxonne, on s'intéresse aux signaux émis par un ou plusieurs émetteurs et à ces mêmes signaux réfléchis par une cible. La mesure, pour un émetteur donné, du retard entre le trajet direct (émetteur → récepteur) et le trajet réfléchi (émetteur → cible → récepteur) permet définir une courbe (ou une surface si le problème est traité en 3D) de localisation qui prend la forme d'une ellipse ou d'un ellipsoïde.

Ainsi, si l'on exploite plusieurs émetteurs simultanément et pourvu que l'on soit en mesure de recevoir les trajets direct et réfléchi, il est possible de déterminer la position de la cible recherchée en déterminant les points/zones d'intersections des différentes courbes/surface de localisation entre elles.

En mode TDOA ou mode "Time Difference Of Arrival" selon la dénomination anglo-saxonne, on s'intéresse à la localisation de cibles émettrices au moyen de plusieurs récepteurs synchronisés (au moins deux), un récepteur principal et un (ou plusieurs) récepteur(s) secondaire(s). Comme dans le mode TOA la position de la cible émettrice est alors déterminée de manière géométrique à partir des courbes de localisation (hyperboles ou hyperboloïdes) établies à partir des mesures des retards entre les différents signaux provenant de la cible et arrivant à des instants différents sur chacun des récepteurs.

Un des problèmes posés par la localisation passive provient de la prise en compte de l'incertitude de la mesure délivrée par les récepteurs. En effet pour réaliser une localisation précise de la cible il est nécessaire de connaître le plus précisément possible la zone de localisation compatible avec les incertitudes affectant les mesures. Par suite les courbes de localisation sont en réalité des zones de localisation, chaque zone étant située entre deux courbes extrêmes dont l'espacement est fonction de la précision des récepteurs. De la sorte, les points d'intersections des différentes courbes de localisations obtenues idéalement en utilisant plusieurs sources émettrices (mode TOA) ou plusieurs récepteurs (mode TDOA) sont remplacées dans la pratique par des zones d'intersection à l'intérieur desquelles se situent ces points.

Dès lors, la recherche des zones de localisation compatibles avec les mesures passe d'abord par la caractérisation mathématique des dites zones puis par leur recherche dans un espace d'intérêt (i.e. l'espace dans lequel on recherche la présence d'une cible).

Le document US2003176196 décrit un procédé de localisation passif d'une cible en mode TDOA. Les méthodes usuelles utilisées pour réaliser cette recherche sont généralement des méthodes à grilles qui consistent à mailler finement tout l'espace dans lequel on recherche les cibles, c'est à dire un espace suffisamment vaste pour contenir la zone d'incertitude, et à analyser systématiquement chaque maille pour vérifier si elle appartient à la zone de localisation. Ce sont également des méthodes algébriques du type moindre carré, ou encore des méthodes probabilistes dont la complexité (et donc la complexité de mise en oeuvre) croît avec le nombre de source d'information. Hormis les méthodes à grille, toutes ces méthodes ne permettent pas de restituer finement les zones d'incertitudes liées aux erreurs de mesure (elles ne donnent que des ellipses ou des ellipsoïdes d'erreur). En outre les méthodes à grilles nécessitent une capacité de calcul importante pour traiter chaque maille de manière suffisamment rapide et déterminer suffisamment rapidement la zone de localisation.

**PRESENTATION DE L'INVENTION**

Un but de l'invention est de bénéficier des avantages des traitements par grille notamment en terme de résolution, sans pour autant en subir les inconvénients.

A cet effet l'invention a pour objet un procédé de localisation passif d'une cible en mode TOA ou TDOA mettant en oeuvre un découpage successif en pavés d'un espace initial (dans lequel on cherche à localiser une cible). L'ensemble des pavés est analysé de manière itérative. A chaque itération chaque pavé d'intérêt est découpé en sous-pavés identiques de taille inférieure. Un pavé d'intérêt est, selon l'invention, un pavé dont au moins un point appartient à la zone de localisation recherchée. Le processus itératif s'arrête lorsque la taille (résolution) des sous-pavés obtenus à l'itération en cours correspond à la résolution souhaitée.

L'ensemble des pavés résultant de ce processus fournit une approximation de la forme de la zone de localisation recherchée (si cette dernière existe dans l'espace initial).

Plus précisément, elle a pour objet un procédé de localisation passif d'une cible en mode TOA ou TDOA mettant en oeuvre un découpage successif en pavés d'un espace initial (dans lequel on cherche à localiser une cible) et une recherche au sein de chaque pavé de la présence de points appartenant à la zone de localisation recherchée. Cette invention est en outre caractérisée par le fait que le découpage et la recherche sont réalisés sous forme d'étapes itératives sur une sélection de pavés candidats, modifiée itération après itération, de sorte qu'à chaque itération on effectue, parmi les pavés de la sélection obtenue à l'issue de l'itération précédente, la recherche des pavés contenant au moins un point appartenant à la zone de localisation recherchée. Les pavés ne contenant aucun point sont par suite exclus de la sélection, tandis que les pavés contenant au moins un point sont re-découpés en sous-pavés et remplacés dans la sélection par les sous-pavés ainsi formés. La sélection obtenue à chaque itération définit la zone de localisation avec une résolution croissant à chaque itération.

Selon l'invention, les itérations sont interrompues lorsque les sous-pavés formant la sélection définissent la zone de localisation avec la résolution souhaitée.

Le procédé selon l'invention comporte, en autre, une étape d'initialisation dans laquelle on définit un premier pavé $[X_0]$ correspondant à un espace de recherche "a priori", ce pavé constituant la sélection initiale.

Selon un mode de mise en oeuvre préféré, le procédé selon l'invention comporte principalement:

- une étape d'initialisation dans laquelle on définit un premier pavé $[X_0]$ correspondant à un espace de recherche a priori et qui conduit à la constitution d'une liste initiale $L_0^0$ formée du pavé $[X_0]$,
- une étape itérative consistant à:

  - décomposer chaque pavé $[X_n]$ de la liste courante $L_0^{i-1}$ en quatre sous-pavés jointifs $[X_n^1]$, $[X_n^2]$, $[X_n^3]$ et $[X_n^4]$,
  - rechercher et sélectionner parmi les sous-pavés ainsi constitués ceux contenant au moins un point faisant partie de la zone de localisation,
  - actualiser la liste courante pour obtenir une liste $L_0^i$ dans laquelle:

    - a) les pavés $[X_n]$ pour lesquels aucun sous-pavé n'a été sélectionné sont supprimés,
    - b) les autres pavés sont remplacés par les sous-pavés $[X_n^j]$ sélectionnés,

  l'étape itérative comporte en outre une opération de comparaison de la taille $\Delta^{Lio(1)}$ des pavés constituant la liste $L_0^i$, le procédé étant interrompu lorsque la taille $\Delta^{Lio(1)}$ est supérieure à l'objectif de résolution $\Delta^{obj}$ désiré.

Selon ce mode de mise en oeuvre, un pavé $[X_n^j]$ est sélectionné si au moins un de ses points vérifie le critère défini comme suit:

$$- \; 0 \in J([x^j]) \; \text{avec} \; J([x^j]) = \left[ \frac{[x^j]^2}{[a]^2} + \frac{[y^j]^2}{[b]^2} - 1 \right]$$

$$- \; 0 \in J([x^j]) \; \text{avec} \; J([x^j]) = \left[ \frac{[x^j]^2}{[c]^2} - \frac{[y^j]^2}{[d]^2} - 1 \right]$$

en mode "TDOA 2D",

$$- \; 0 \in J\!\left(\left[x^j\right]\right) \text{ avec } J\!\left(\left[x^j\right]\right) = \left[ \frac{\left[x^j\right]^2}{\left[a\right]^2} + \frac{\left[y^j\right]^2}{\left[b\right]^2} + \frac{\left[z^j\right]^2}{\left[b\right]^2} - 1 \right]$$

$$- \; 0 \in J\!\left(\left[x^j\right]\right) \text{ avec } J\!\left(\left[x^j\right]\right) = \left[ \frac{\left[x^j\right]^2}{\left[c\right]^2} - \frac{\left[y^j\right]^2}{\left[d\right]^2} - \frac{\left[z^j\right]^2}{\left[d\right]^2} - 1 \right]$$

"TDOA 3D" en mode

L'invention repose sur l'approche ensembliste utilisée pour localiser la cible. Les mesures issues des différents senseurs sont modélisées par des intervalles (i.e., elles intègrent une erreur bornée). Sachant ces mesures, l'invention permet, par un processus itératif basé sur un critère ensembliste ad hoc (i.e. dépendant du problème, TOA/TDOA mono/ multi senseurs) de trouver et d'approcher avec la résolution voulue, toutes les zones de l'espace susceptibles, aux vues des mesures, de contenir une cible. La localisation est ensembliste dans le sens où l'invention fournit un ensemble solution au problème de la localisation (i.e. un ensemble de position de cible contenant de manière garantie la vraie position de la cible).

Contrairement à une méthode à grille, il n'est pas nécessaire de mailler tout l'espace, le processus itératif utilisé dans l'invention permet de se concentrer directement sur les régions d'intérêt.

## DESCRIPTION DES FIGURES

Les caractéristiques et avantages de l'invention seront mieux appréciés grâce à la description qui suit, description qui expose l'invention au travers d'un mode de réalisation particulier pris comme exemple non limitatif et qui s'appuie sur les figures annexées, figures qui représentent:

- la figure 1, une configuration géométrique mono-émetteur typique permettant la mise en oeuvre du mode TOA ,
- la figure 2, une représentation du jeu de courbes de localisation idéalement obtenu en mode TOA avec trois sources émettrices,
- la figure 3, une configuration géométrique bi-récepteur typique permettant la mise en oeuvre du mode TDOA,
- la figure 4, une représentation du jeu de courbes de localisation idéalement obtenu en mode TDOA avec trois récepteurs secondaires,
- la figure 5, la représentation d'une zone de localisation réellement obtenue en mode TOA avec une source émettrice,
- la figure 6, la représentation d'une zone de localisation réellement obtenue en mode TDOA avec un récepteur,
- la figure 7, un organigramme de principe du procédé selon l'invention,
- la figure 8, une illustration de l'application du procédé selon l'invention au mode TOA 2D avec un système mono-émetteur,
- la figure 9, une illustration de l'application du procédé selon l'invention au mode TDOA 2D avec un système mono-récepteur secondaire,
- la figure 10, une illustration de l'application du procédé selon l'invention au mode TOA 2D avec un système bi-émetteurs,
- la figure 11, une illustration de l'application du procédé selon l'invention au mode TDOA 2D avec un système bi-récepteurs secondaires,

## DESCRIPTION DETAILLEE

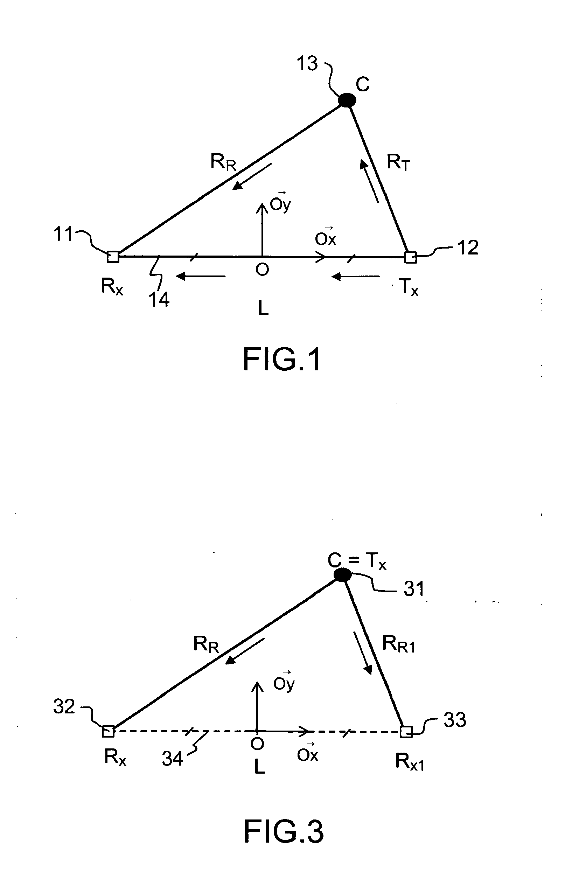

On s'intéresse dans un premier temps à la figure 1 qui présente de manière schématique le principe de fonctionnement idéal du mode de localisation TOA. Pour des raisons de clarté de l'exposé le modèle illustré ici est un modèle à deux dimensions correspondant à l'exploitation des signaux issus d'un seul émetteur (modèle mono-émetteur 2D).

Comme l'illustre la figure, ce mode de fonctionnement "mono-émetteur" met en jeu une source émettrice 12 (émetteur), un récepteur 11, et une cible 13 que l'on cherche à localiser. Pour localiser la cible, le récepteur 11 mesure le retard temporel existant entre l'onde reçue en provenance directe de l'émetteur 12 (onde directe), et l'onde reçue provenant de la réflexion de l'onde émise par la source 12, sur la cible 13 que l'on cherche à localiser (onde réfléchie).

Dans une telle configuration, si on appelle L la distance entre la source émettrice 12 et le récepteur 11, $R_T$ la distance entre la source 12 et la cible 13 et $R_R$ la distance entre la cible et le récepteur, la localisation de la cible 13 consiste à effectuer la mesure du retard entre les ondes directe et réfléchie et à déterminer à partir de ce retard, par toute méthode appropriée connue, la distance $R_b$ parcourue par l'onde réfléchie, définie par:

$$R_b = R_T + R_R$$

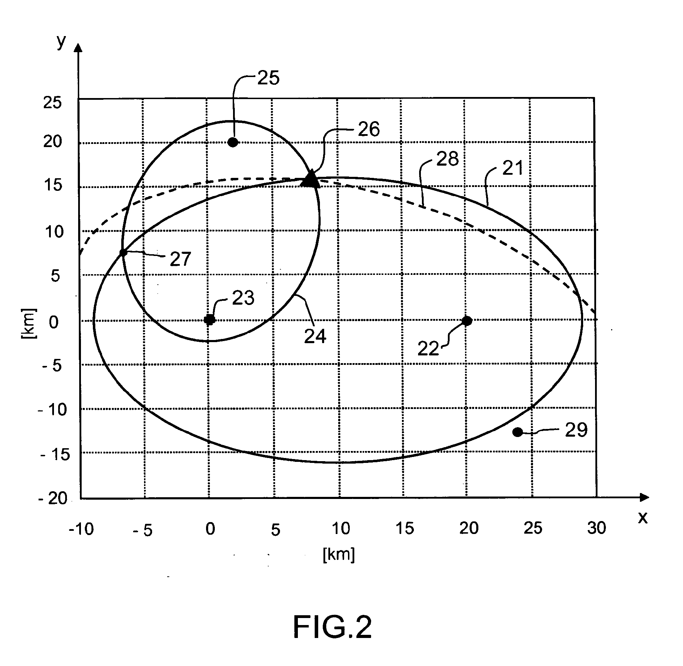

La cible 13 est alors localisée comme l'illustre la courbe 21 de la figure 2 sur une ellipse d'ambiguïté ayant pour foyers 22 et 23 la position de la source émettrice 12 et celle du récepteur 11 et dont le grand axe (axe semi-majeur) a pour longueur $R_b/2$.

Par suite, si on définit un repère cartésien xOy centré sur le milieu du segment de droite $[R_x, T_x]$ 14 reliant la source 12 et le récepteur 11 et dont le vecteur $\overrightarrow{Ox}$ est colinéaire au vecteur $\overrightarrow{R_x T_x}$ , l'équation de cette ellipse de localisation 21 dans le repère xOy a pour expression la relation suivante:

$$\frac{x^2}{a^2} + \frac{y^2}{b^2} = 1 \qquad\qquad\qquad [1]$$

avec:

$$a = R_b/2$$

et

$$b = \sqrt{a^2 - L^2/4}$$

Pour affiner la localisation de la cible 13, il est bien entendu nécessaire de disposer de plusieurs source d'émission. De la sorte pour une même cible 13 on peut associer à chaque source une ellipse de localisation, les intersections de ces ellipses définissant les positions possibles de la source à localiser. Les courbes 21 et 24 de la figure 2 illustrent les résultats obtenus avec une configuration "bi-émetteurs 2D" à partir de laquelle on obtient deux ellipses de localisation dont les foyers 22, 23 et 25 sont respectivement le récepteur et la première source pour l'ellipse 21, et le récepteur et la deuxième source pour l'ellipse 24. L'ensemble des lieux possibles de localisation de la cible 13 est alors constitué des deux points d'intersection 26 et 27 des deux courbes.

Par suite, pour déterminer la position de la cible 13 sans ambiguïté il est nécessaire de disposer d'au moins une source d'émission supplémentaire (configuration "multi-émetteurs 2D") l'intersection des trois ellipses 21, 24, et 28 de localisation définissant un point commun unique, le point 26 par exemple, sur lequel est située la cible 13.

On s'intéresse ensuite à la figure 3 qui présente de manière schématique le principe de fonctionnement idéal du mode de localisation TDOA. Pour des raisons de clarté de l'exposé le modèle illustré ici est, comme pour la présentation du mode TOA, un modèle à deux dimensions correspondant à l'exploitation des signaux issus d'une cible émettrice 31 et reçus par deux récepteurs 32 et 33 distants l'un de l'autre, un récepteur de référence dit récepteur principal et un récepteur, dit récepteur secondaire, synchronisé sur le récepteur de référence (modèle mono-récepteur secondaire 2D).

Comme l'illustre la figure 3, ce mode de fonctionnement "mono-récepteur secondaire" met en jeu une cible émettrice 31 (émetteur) que l'on cherche à localiser, un récepteur 32 de référence, et un récepteur secondaire 33. Pour localiser la cible, on exploite alors le retard temporel existant entre l'instant de réception par le récepteur de référence de l'onde émise par la cible 31 et l'instant de réception de cette même onde par le récepteur secondaire 33.

Dans une telle configuration, si on appelle L la distance entre les deux récepteurs 32 et 33, $R_R$ la distance entre la cible émettrice 31 et le récepteur de référence 32 et $R_{R1}$ la distance entre la cible émettrice 31 et le récepteur secondaire 33, la localisation de la cible 31 consiste à effectuer la mesure du retard entre les ondes reçues par les deux récepteurs et à déterminer à partir de ce retard, par toute méthode appropriée connue, l'écart de distance parcourue $R_{d1}$ définie par:

$$R_{d1} = R_{R1} - R_R$$

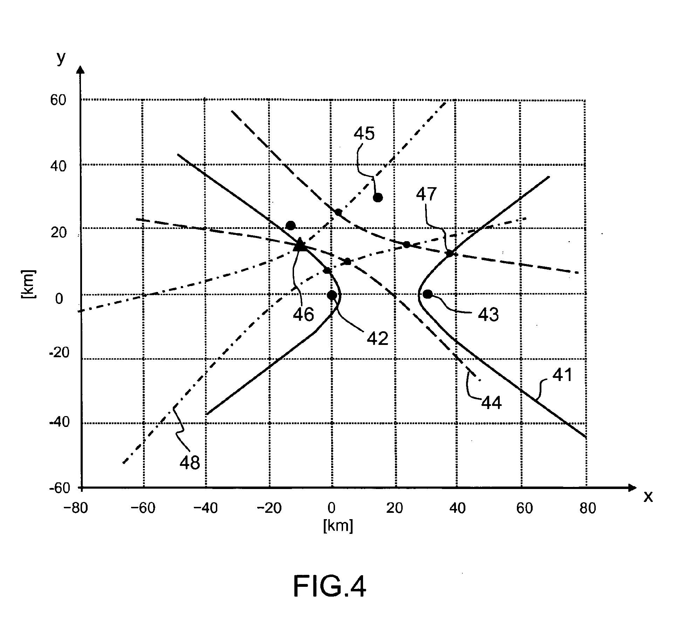

La cible 31 est alors localisée comme l'illustre la courbe 41 de la figure 4 sur une hyperbole ayant pour foyers 42 et 43 la position du récepteur de référence et celle du récepteur secondaire et dont la distance inter-sommets a pour valeur $R_{d1}/2$.

Par suite, si on définit un repère cartésien xOy centré sur le milieu du segment de droite $[R_x, R_{x1}]$ 34 reliant le récepteur de référence 32 et le récepteur secondaire 33 et dont le vecteur $\overrightarrow{Ox}$ est colinéaire au vecteur $\overrightarrow{R_xR_{x1}}$, l'équation de cette hyperbole de localisation 41 dans le repère xOy a pour expression:

$$\frac{x^2}{c^2} - \frac{y^2}{d^2} = 1 \qquad\qquad [2]$$

avec:

$$c = R_{d1}/2$$

et

$$d = \sqrt{L^2/4 - c^2}$$

Pour affiner la localisation de la cible 31, il est bien entendu nécessaire de disposer de plusieurs récepteurs secondaires. De la sorte pour une même cible 31 on peut associer à chaque couple récepteur de référence/récepteur secondaire, une hyperbole de localisation. Les intersections de ces hyperboles définissent alors les positions possibles de la cible. Les courbes 41 et 44 de la figure 4 illustrent les résultats obtenus avec une configuration "bi-récepteurs secondaires 2D" à partir de laquelle on obtient deux hyperboles de localisation dont les foyers 42, 43 et 45 sont respectivement le récepteur $R_x$ de référence et le récepteur secondaire $R_{x1}$ pour l'hyperbole 41 et le récepteur de référence $R_x$ et un second récepteur secondaire $R_{x2}$ pour l'hyperbole 44. L'ensemble des lieux possibles de localisation de la cible 31 est alors constitué des points d'intersection 46 et 47 des deux courbes.

Par suite, pour déterminer la position de la cible 31 sans ambiguïté il est nécessaire de disposer d'au moins un récepteur secondaire supplémentaire (configuration "multi-récepteurs secondaires 2D") l'intersection des trois hyperboles 41, 44, et 48 de localisation définissant un point commun unique, le point 46 dans l'exemple, sur lequel est située la cible 31.

Le principe théorique de détermination exposé dans les paragraphes précédents au travers d'une localisation en deux dimensions (localisation "2D") peut naturellement être généralisé à une localisation dans l'espace (ie en localisation 3D).

En mode TOA l'ellipse de localisation en mode "mono-émetteur" est remplacée par un ellipsoïde dans l'espace, ellipsoïde qui peut être représenté par l'équation suivante:

$$\frac{x^2}{a^2} + \frac{y^2}{b^2} + \frac{z^2}{b^2} = 1 \qquad\qquad [3]$$

avec:

$$a = R_b/2$$

et

$$b = \sqrt{a^2 - L^2/4}$$

De même, en mode TDOA, l'hyperbole de localisation en mode "mono-récepteur secondaire" est remplacée par un hyperboloïde dans l'espace, hyperboloïde qui peut être représenté par:

$$\frac{x^2}{c^2} - \frac{y^2}{d^2} - \frac{z^2}{d^2} = 1 \qquad\qquad [4]$$

avec:

$$c = R_{d1}/2$$

et

$$d = \sqrt{L^2/4 - c^2}\ .$$

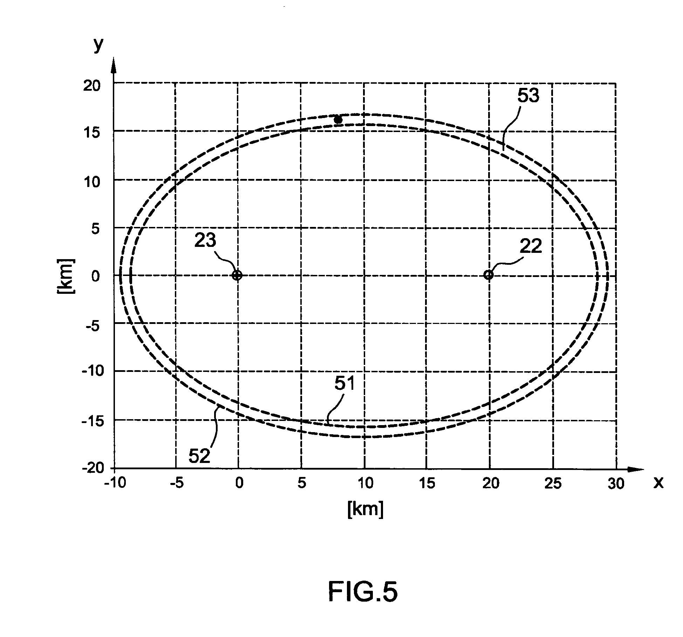

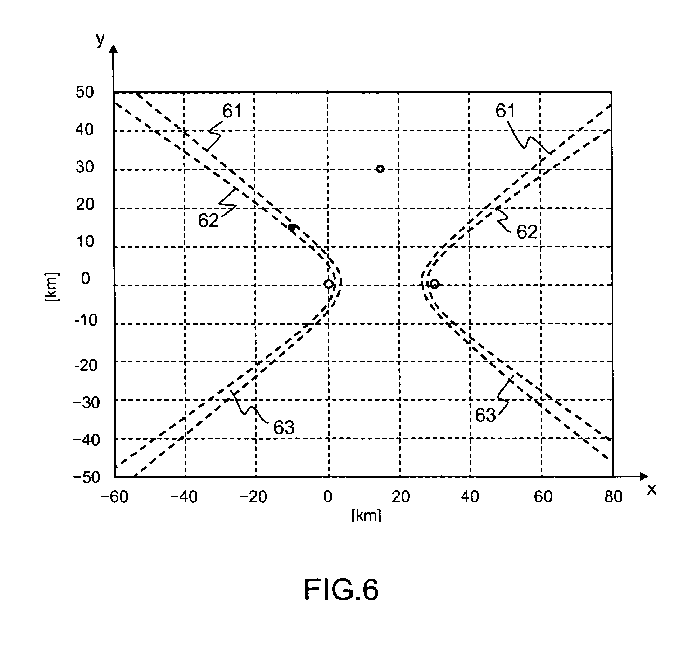

On s'intéresse à présent aux figures 5 et 6 qui illustrent au travers des cas simples de localisation en mode TOA 2D (figure 5) et en mode TDOA 2D (figure 6) le problème posé par la précision des mesures réelles obtenues avec les récepteurs.

Comme tout dispositif de mesure, les récepteurs utilisés par les systèmes de localisation passive fournissent des mesures entachées d'une certaine imprécision que l'on peut supposer bornée. Cette imprécision conduit à représenter les mesures de distance effectuée en mode TOA ou TDOA, non plus par des valeurs exactes, mais par des intervalles dont la taille correspond à l'erreur maximale de mesure. Ces intervalles [x] sont définis par la relation suivante:

$$[x] = [x^-, x^+] = \{x \in \Re / x^- \leq x \leq x^+\} \qquad\qquad [5]$$

où $\Re$ représente l'ensemble des nombres réels.

Si $\sigma_{R_b}$ représente l'erreur maximale sur la mesure de $R_b$ en mode TOA, une mesure de $R_b$ à erreur bornée se défini par l'intervalle:

$$[R_b^-, R_b^+] := [\ R_b - \sigma_{R_b}, R_b + \sigma_{R_b}\ ] \qquad\qquad [6]$$

Par suite, la prise en compte d'une erreur bornée sur la mesure de $R_b$ en mode "TOA 2D" conduit à la localisation de la cible considérée non pas sur une courbe mais sur une surface de localisation délimitée par deux ellipses confocales 51 et 52 de paramètres respectifs $R_b{}^-$ et $R_b{}^+$, telle que celle illustrée sur la figure 5. Cette surface 53 peut être décrite par la forme paramétrique suivante:

$$\left\{(x, y) \in \Re^2 \middle| 1 \in \frac{x^2}{[a]^2} + \frac{y^2}{[b]^2}\right\} \qquad [7]$$

où:

$$[a] = [R_b]/2$$

et

$$[b] = \sqrt{[a]^2 - L^2/4}$$

sont évalués en appliquant les règles du calcul par intervalle.

De manière analogue, si l'on effectue une localisation dans l'espace ("TOA 3D"), la prise en compte des erreurs bornées sur la mesure de $R_b$ conduit à la localisation de la cible considérée dans un volume défini par deux ellipsoïdes confocaux, volume qui peut être décrit par la forme paramétrique suivante:

$$\left\{(x, y, z) \in \Re^3 \middle| 1 \in \frac{x^2}{[a]^2} + \frac{y^2}{[b]^2} + \frac{z^2}{[b]^2}\right\} \qquad [8]$$

Comme pour le mode TOA, la prise en compte d'une erreur bornée sur la mesure de $R_{d1}$ en mode "TDOA 2D" conduit à la localisation de la cible considérée non pas sur une courbe mais sur une surface de localisation délimitée par deux hyperboles confocales 61 et 62 de paramètres respectifs $R_{d1}{}^-$ et $R_{d1}{}^+$ définis par l'intervalle $[R_{d1}{}^-, R_{d1}{}^+] := [R_{d1} - \sigma_{R_{d1}}, R_{d1} + \sigma_{R_{d1}}]$, telle que celle illustrée à la figure 6. Cette surface 63 peut être décrite par la forme paramétrique suivante:

$$\left\{(x, y, z) \in \Re^2 \middle| 1 \in \frac{x^2}{[c]^2} - \frac{y^2}{[d]^2}\right\} \qquad [9]$$

avec:

$$[c] = [R_{d1}]/2$$

et

$$[d] = \sqrt{L^2/4 - [c]^2}$$

Dans le cas d'une localisation dans l'espace ("TDOA 3D"), la prise en compte des erreurs bornées sur la mesure de $R_{d1}$ conduit à la localisation de la cible considérée dans un volume défini par deux hyperboloïdes confocaux, volume qui peut être décrit, de manière analogue, par la forme paramétrique suivante:

$$\left\{ (x, y, z) \in \mathfrak{R}^3 \,\middle|\, 1 \in \frac{x^2}{[c]^2} - \frac{y^2}{[d]^2} - \frac{z^2}{[d]^2} \right\} \qquad [10]$$

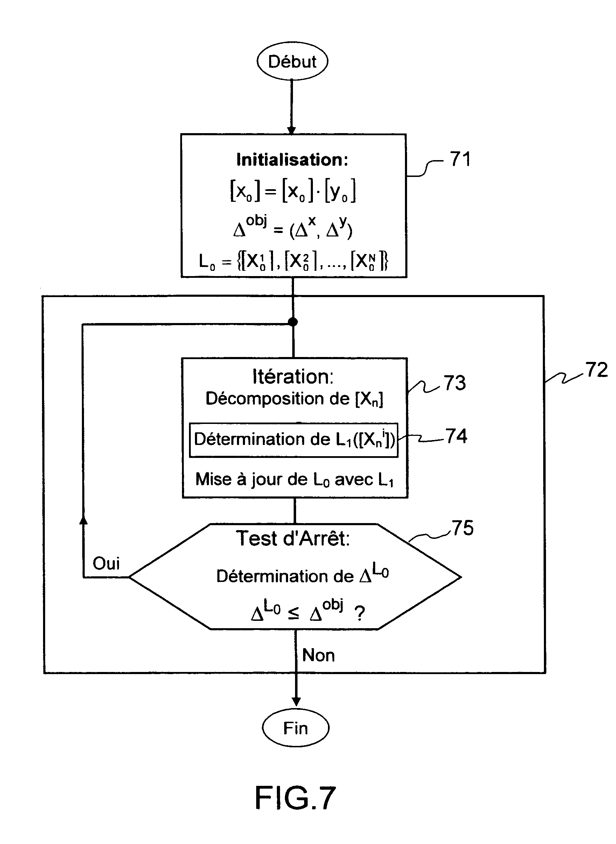

On s'intéresse à présent à la figure 7 qui présente sous forme schématique le principe du procédé selon l'invention. Afin de rendre l'exposé du principe de fonctionnement du procédé selon l'invention plus clair, ce principe est décrit ici de manière détaillée pour le cas particulier de la recherche d'une zone d'une localisation au moyen de systèmes de localisation de type "mono-émetteur" (localisation en mode TOA) ou "mono-récepteur secondaire" (localisation en mode TDOA).

Le principe de base du procédé consiste en un affinage progressif de la zone de localisation. Il consiste à découper l'espace que l'on désire analyser (i.e le pavé $[x_0] \times [y_0]$ initial de recherche) en sous pavés jointifs dans lesquels la présence d'une cible est évaluée au moyen d'un critère ad-hoc. Les sous pavés dans lesquels la présence d'une cible est avérée sont à leur tour découpés, les autres sont rejetés. Le processus itératif ainsi créé se répète tant que la présence d'une cible est avérée dans les pavés en cours d'analyse et qu'un critère d'arrêt (correspondant à un objectif de largeur des pavés) n'est pas atteint.

Le procédé selon l'invention comporte à cet effet plusieurs étapes:

- une étape 71 d'initialisation
- une étape 72 de calcul itératif

L'étape 71 d'initialisation consiste à définir un pavé initial, $[X_0]$, correspondant à un espace de recherche a priori. En mode 2D on a ainsi:

$$[X_0] = [x_0] \times [y_0],$$

et en mode 3D :

$$[X_0] = [x_0] \times [y_0] \times [z_0].$$

L'étape 71 consiste également à initialiser une liste $L_0$, de taille variable au cours de la mise en oeuvre du procédé, comportant la liste des pavés à étudier. Le contenu de $L_0$ est initialisé avec $[X_0]$

L'étape 71 consiste encore à définir un critère d'arrêt du procédé. Ce critère d'arrêt est donné ici par la résolution "objectif" $\Delta^{obj}$ avec laquelle on souhaite finalement caractériser la zone de localisation. Cette résolution est naturellement limitée par la précision des mesures fournies par les récepteurs, mais peut être arbitrairement fixée dans cette limite.

En mode de localisation 2D elle est peut être définie dans un repère xOy par $\Delta^{obj} = \left( \Delta_x^{obj}, \Delta_y^{obj} \right)$.

L'étape 71 est suivie d'une étape 72 réalisant un traitement itératif qui comporte deux boucles de traitement imbriquées, une boucle principale 73 et une boucle secondaire 74.

La boucle principale 73 consiste à actualiser la liste $L_0$ établie lors de l'initialisation avec les résultats du traitement réalisé par la deuxième boucle. Ainsi, à chaque itération i de la boucle principale on dispose d'une liste $L_0$ réactualisée, notée $L^i_0$.

A chaque itération, chaque pavé $\left[X^i_{0,k}\right] = L^i_0(k)$ constituant la liste $L^i_0$ est découpé en N sous-pavés jointifs (N=4 en mode 2D, N=8 en mode 3D) et regroupés en une listes $L_1$.

La boucle secondaire 74 consiste quant à elle, à supprimer de $L_1$, les pavés incompatibles avec la zone de localisation recherchée (c'est à dire les pavés ne validant pas le critère).

Par suite, l'élément $\left[X^i_{0,k}\right]$ de $L^i_0$ est remplacé, dans $L^i_0$, par la liste $L_1$.

Selon l'invention, la méthode choisie pour déterminer si un sous-pavé $[X^j]$ inclut une partie de la zone de localisation consiste à déterminer si un ou plusieurs points du sous-pavé appartiennent à cette zone.

Pour ce faire dans les systèmes "mono-émetteur" ou "mono-récepteur secondaire" on considère simplement la grandeur $J([X^j])$, définie selon le mode de localisation considéré par:

$$- \text{ en mode "TOA 2D"}: \quad J\left(\left[X^j\right]\right) = \left[\frac{\left[x^j\right]^2}{\left[a\right]^2} + \frac{\left[y^j\right]^2}{\left[b\right]^2} - 1\right] \qquad [11]$$

$$- \text{ en mode "TOA 3D"}: \quad J\left(\left[X^j\right]\right) = \left[\frac{\left[x^j\right]^2}{\left[a\right]^2} + \frac{\left[y^j\right]^2}{\left[b\right]^2} + \frac{\left[z^j\right]^2}{\left[b\right]^2} - 1\right] \qquad [12]$$

$$- \text{ en mode "TDOA 2D"}: \quad J\left(\left[X^j\right]\right) = \left[\frac{\left[x^j\right]^2}{\left[c\right]^2} - \frac{\left[y^j\right]^2}{\left[d\right]^2} - 1\right] \qquad [13]$$

$$- \text{ en mode "TDOA 3D"}: \quad J\left(\left[X^j\right]\right) = \left[\frac{\left[x^j\right]^2}{\left[c\right]^2} - \frac{\left[y^j\right]^2}{\left[d\right]^2} - \frac{\left[z^j\right]^2}{\left[d\right]^2} - 1\right] \qquad [14]$$

avec $[X^j]=[x^j]\times[y^j]$ pour les modes "2D",
et $[X^j]=[x^j]\times[y^j]\times[z^j]$ pour les modes "3D"

Par suite pour vérifier si au moins un point d'un pavé $[X^j]$ appartient à la zone de localisation, il suffit, selon l'invention, de vérifier si:

$$0 \in J\left(\left[X^j\right]\right).$$

La boucle principale est par nature une boucle sans fin pour laquelle il est nécessaire de déterminer une condition d'arrêt et une opération de test de l'apparition de cette condition d'arrêt. Selon l'invention cette condition d'arrêt est initialisée lors de l'étape 71 et porte sur la résolution $\Delta^{obj}$ avec laquelle on souhaite définir la zone de localisation. Aussi la boucle principale 73 comporte une opération de test 75 exécutée en fin de traitement à chaque itération i. Cette condition est définie par la relation suivante:

$$\Delta^{L_0^i(1)} \leq \Delta^{obj} \equiv \begin{cases} \Delta_x^{L_0^i(1)} \leq \Delta_x^{obj} \\ \quad\text{et} \\ \Delta_y^{L_0^i(1)} \leq \Delta_y^{obj} \end{cases} \qquad\qquad [11]$$

où $\Delta^{L_{i0}(1)}$ représente la résolution du premier pavé constituant la liste $L_0^i$, chaque pavé de la liste ayant une résolution identique à ce stade.

Ainsi, tant que la condition de la relation [11] se trouve vérifiée, l'étape 72 de calcul itératif se répète. L'itération ne cesse que lorsque la résolution souhaitée est atteinte.

Ainsi, appliqué à un traitement de localisation TOA ou TDOA à deux dimensions et pour un découpage itératif de chaque pavé en P = 4 sous-pavés le procédé selon l'invention peut être décrit par l'enchaînement d'actions suivant:

1. Définition de la taille initiale d'une cellule d'analyse (pavé):

$$[X_0] = [x_0] \times [y_0].$$

2. Initialisation de la liste $L_0$ des pavés analysés: $L_0^0$

3. Définition du critère d'arrêt: $\Delta^{obj} = (\Delta_x^{obj}, \Delta_y^{obj})$.

4. /début de boucle **principale/ :** (Constitution de $L_0^i$)

5. Pour n variant de 1 à la taille de la liste $L_0^{i-1}$

6. découpe de chaque pavé n en P= 4 sous-pavés jointifs:

$$[X_n^1] = [x^-, (x^- + x^+)/2] \cdot [y^-, (y^- + y^+)/2]$$

$$[X_n^2] = [x^-, (x^- + x^+)/2] \cdot [(y^- + y^+)/2, y^+]$$

$$[X_n^3] = [(x^- + x^+)/2, x^+] \cdot [y^-, (y^- + y^+)/2]$$

$$[X_n^4] = [(x^- + x^+)/2, x^+] \cdot [(y^- + y^+)/2, y^+]$$

7. création de la liste

$$L_1^n = \{ [X_n^1], [X_n^2], [X_n^3], [X_n^4] \}$$

8. **/début de boucle secondaire/**

9. Pour j variant de 1 à 4

10. Suppression des sous-pavés $\left[X_n^j\right]$, ne vérifiant pas le critère de sélection $0 \in J\!\left(\!\left[X_n^j\right]\!\right)$ : Constitution de $L_1^n$ .

11.

- si $L_1^n$ n'est pas vide: remplacement, dans $L_0^{i-1}$, du pavé $[X_n]$ par la liste $L_1^n$ .

- si $L_1^n$ est vide: suppression du pavé $[X_n]$ de la liste $L_0^{i-1}$

12. **/fin de boucle secondaire/**

13. **/fin de boucle principale/** (Constitution de $L_0^i$)

14. Calcul de la résolution du premier élément de $L_0^i$:

$$\Delta^{L_0^i(1)} = \left( x^+_{L_0^i(1)} - x^-_{L_0^i(1)}, y^+_{L_0^i(1)} - y^-_{L_0^i(1)} \right)$$

15.

- si $\Delta^{L_0^i(1)} \leq \Delta^{obj}$ : retour à /début de boucle principale/

- sinon: fin de la procédure

16. **/fin de procédure/**

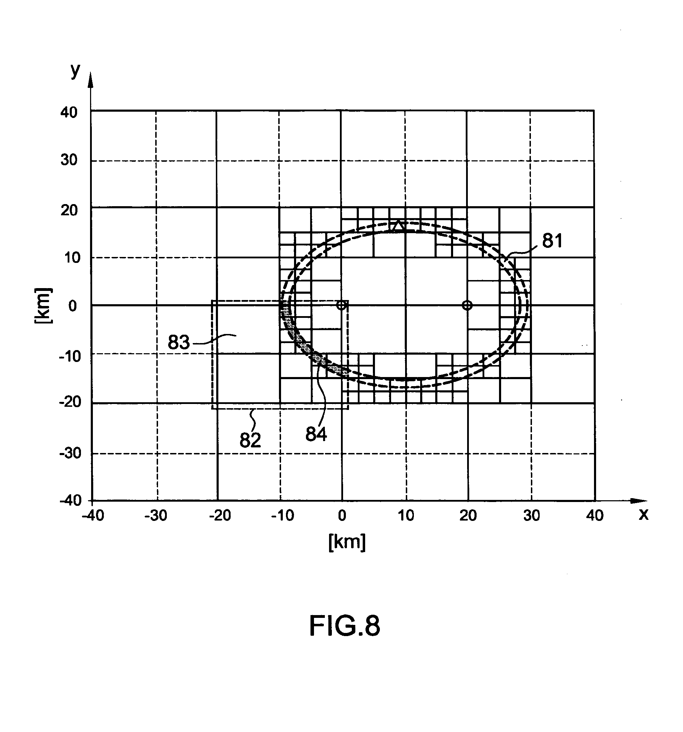

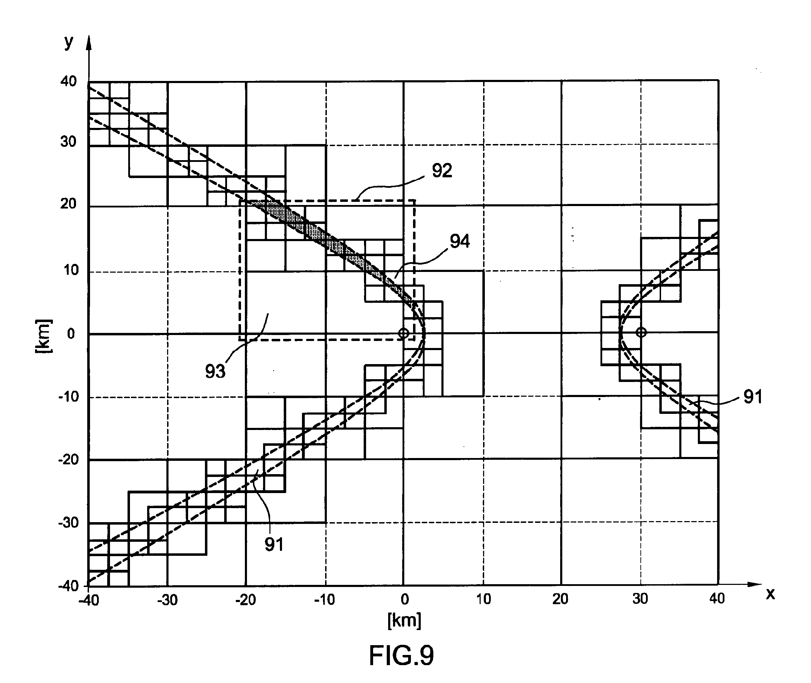

Le principe de mise en oeuvre du procédé selon l'invention peut être avantageusement illustré par les figures 8 et 9.

La figure 8 illustre la mise en oeuvre du procédé selon l'invention sur une localisation en mode TOA, avec un système du type "mono-émetteur 2D".

Comme on peut le constater sur la figure, la mise en oeuvre du procédé selon l'invention se concrétise par un découpage en pavés de l'espace incluant la zone de localisation 81. Ce découpage constitue un maillage de l'espace, maillage dont chaque maille est analysée pour déterminer si elle inclut ou non une partie de la zone de localisation. Le maillage ainsi constitué est affiné de manière itérative. Au cours des itérations successives, certaines mailles 83 formées par la division d'une maille 82 plus grande incluant une partie 84 de la zone de localisation n'incluent plus de telles parties. Selon l'invention, le processus d'affinage de ces zones "vides" cesse alors, ce qui permet avantageusement d'éviter de poursuivre pour de telles mailles une analyse stérile et coûteuse en charge de calcul et de concentrer l'affinage sur les mailles où il présente un intérêt pour déterminer le plus précisément possible la zone de localisation 81. On obtient ainsi avantageusement un maillage irrégulier dans lequel le maillage étroit est seulement centré sur la zone de localisation.

La figure 9 illustre de la même manière la mise en oeuvre du procédé selon l'invention sur une localisation en mode TDOA, avec un système du type "mono-récepteur secondaire 2D". La mise en oeuvre du procédé selon l'invention se concrétise de la même façon par un découpage en pavés de l'espace incluant la zone de localisation 91. On obtient également des zones 93 pour lesquelles l'affinage n'est pas réalisé et des zones 94 pour lesquelles il est poursuivi.

Le procédé selon l'invention, détaillé dans les paragraphes précédents pour le cas particulier de systèmes de types "TOA mono-émetteur" ou "TDOA mono-récepteur secondaire" peut bien entendu être appliqué aux systèmes de localisation plus complexes de type "TOA multi-émetteurs" ou "TDOA multi-récepteurs secondaires" en 2D ou en 3D. Ces types de systèmes permettent, en considérant les intersections des différentes zones de localisation, d'affiner la localisation de la cible recherchée en limitant la zone de localisation aux intersections des différentes zones obtenues. En ce qui concerne ces modes, le procédé selon l'invention, tel qu'il est décrit dans ce qui précède, reste applicable dans son principe. Seul le critère de sélection d'un sous-pavé utilisé dans la boucle secondaire de l'étape 72 de traitement itératif se trouve modifié. Ainsi, si le système comporte un nombre total N d'émetteurs (localisation en mode "TOA multi-émetteurs") ou de récepteurs (localisation en mode "TDOA multi-récepteurs secondaires"), un sous-pavé [X] sera sélectionné si la relation suivante se trouve vérifiée:

$$A = \sum_{j=1}^{N} a_j = N \qquad\qquad\qquad [12]$$

où chaque élément $a_j$ représente le résultat du calcul d'un critère de sélection relatif à un couple (récepteur $R_x$, émetteur $T_x^i$) (mode de localisation TOA) ou (récepteur de référence $R_x$, récepteur secondaire $R_x^i$) (mode de localisation TDOA).

Les éléments $a_j$ sont définis par les relations suivantes:

$$a_1 = \begin{cases} 1 \text{ si } 0 \in J_1([X]) \\ 0 \text{ sinon} \end{cases}$$

.......

$$a_N = \begin{cases} 1 \text{ si } 0 \in J_N([X]) \\ 0 \text{ sinon} \end{cases}$$

Et où $J_j([X])$ représente pour chaque système unitaire ($R_x$, $T_{xj}$) ou ($R_x$, $R_{xj}$) la grandeur $J([X])$ définie précédemment ([11,12,13,14]).

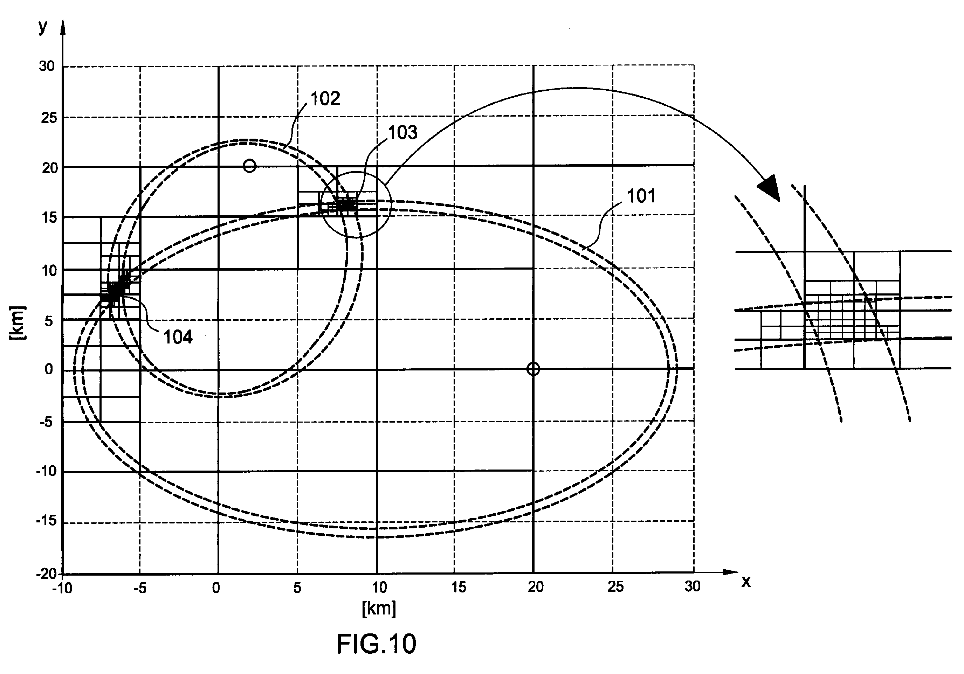

Les figures 10 illustrent la mise en oeuvre du procédé dans le cas d'un système de localisation de type "TOA bi-émetteurs". Comme on peut le constater sur la figure, le maillage réalisé grâce au procédé selon l'invention est encore un maillage irrégulier pour lequel les mailles étroites, de plus grande résolution, sont localisées sur les zones de localisation 101 et 102 définies par chaque système unitaire, et plus précisément sur les parties 103 et 104 de ces zones constituant des intersections et qui représente les zones de localisation possible de la cible.

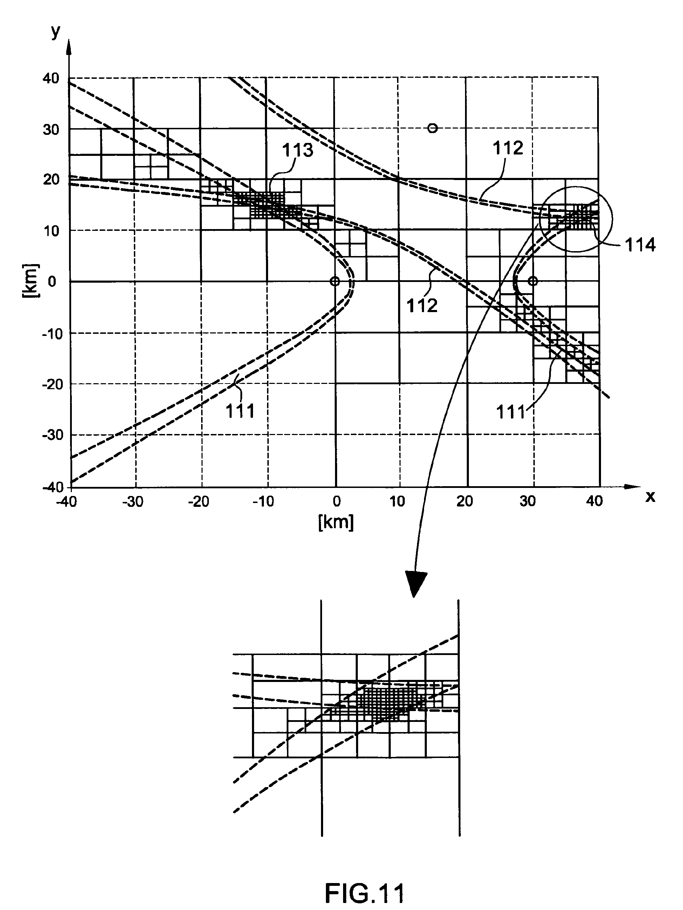

La figure 11, quant à elle, illustre de manière analogue la mise en oeuvre du procédé dans le cas d'un système de localisation de type "TDOA bi-récepteurs secondaires". Comme pour le cas précédent on peut constater que le maillage réalisé par le procédé selon l'invention comporte des mailles étroites seulement aux endroits des zones 113 et 114 représentant les intersections des zones de localisation 111 et 112 définies par chaque système unitaire.

Tout système n'étant pas parfait, une certaine tolérance peut être admise quant au nombre de critères élémentaires $J_n([X])$ satisfait simultanément. Cette tolérance se traduit par une acceptation d'un intervalle [X] si $A \geq M$ (avec $M \leq N$).

La présente invention s'étend, par adaptation des critères élémentaires $J_n([X])$ :

- aux problèmes de localisation Multi-TOA: utilisation d'une famille de critères élémentaires regroupant les critères élémentaires associés à chacun des problèmes de TOA (ce cas de figure se présente lorsque l'on cherche à localiser une cible en exploitant deux récepteurs non co-localisés fonctionnant en mode TOA).
- aux problèmes de localisation Multi-TDOA: utilisation d'une famille de critères élémentaires regroupant les critères élémentaires associés à chacun des sous problèmes de TDOA.
- aux problèmes de localisation mixtes TOA/TDOA: utilisation d'une famille de critères élémentaires regroupant les critères élémentaires associés à chacun des problèmes de TOA et de TDOA.

**Revendications**

**1.** Procédé de localisation passif d'une cible en mode TOA ou TDOA mettant en oeuvre un découpage en pavés de l'espace dans lequel se situe la zone de localisation et une recherche au sein de chaque pavé de la présence de points appartenant à cette zone de localisation considérée,
**caractérisé en ce que** le découpage et la recherche sont réalisés sous forme d'étapes itératives sur une sélection de pavés candidats, modifiée itération après itération, de sorte qu'à chaque itération on effectue, parmi les pavés de la sélection obtenue à l'issue de l'itération précédente, la recherche des pavés contenant au moins un point appartenant à la zone de localisation, les pavés ne contenant aucun point étant par suite exclus de la sélection, tandis que les pavés contenant au moins un point sont redécoupés en sous-pavés et remplacés dans la sélection par les sous-pavés ainsi formés, la sélection obtenue à chaque itération définissant la zone de localisation avec une précision croissant à chaque itération.

2. Procédé selon la revendication 1, comportant en outre une étape d'initialisation dans laquelle on définit un premier pavé $[X_0]$ correspondant à un espace de recherche a priori, ce pavé constituant la sélection initiale.

3. Procédé selon l'une des revendications 1 ou 2, dans lequel les itérations sont interrompues lorsque les sous-pavés formant la sélection définissent la zone de localisation avec la résolution souhaitée.

4. Procédé selon l'une des revendications précédentes, **caractérisé en ce qu'**il comporte:

   - une étape d'initialisation (71) dans laquelle on définit un premier pavé $[X_0]$ correspondant à un espace de recherche a priori et qui conduit à la constitution d'une liste initiale $L_0^0$ formée du pavé $[X_0]$,
   - une étape itérative (72) consistant à:
   - décomposer (73) chaque pavé $[X_n]$ de la liste courante $L_0^{i-1}$ en quatre sous-pavés jointifs $[X_n^1]$, $[X_n^2]$, $[X_n^3]$ et $[X_n^4]$,
   - rechercher et sélectionner (73) parmi les sous-pavés ainsi constitués ceux contenant au moins un point faisant partie de la zone de localisation,
   - actualiser (73) la liste courante pour obtenir une liste $L_0^i$ dans laquelle:
   - les pavés $[X_n]$ pour lesquels aucun sous-pavé n'a été sélectionné sont supprimés,
   - les autres pavés sont remplacés par les sous-pavés $[X_n^j]$ sélectionnés,

   l'étape itérative comportant un test (75) de comparaison de la résolution $\Delta^{Li0(1)}$ des pavés constituant la liste $L_0^i$, le procédé étant interrompu lorsque la résolution $\Delta^{Li0(1)}$ est supérieure à la résolution $\Delta^{obj}$ désirée.

5. Procédé selon la revendication 4, pour lequel, en mode de localisation "TOA 2D mono émetteur", un sous pavé $[X_n^j]$ est sélectionné s'il vérifie le critère défini par:

$$- 0 \in J([x^j]) \text{ avec } J([x^j]) = \left[ \frac{[x^j]^2}{[a]^2} + \frac{[y^j]^2}{[b]^2} - 1 \right].$$

6. Procédé selon la revendication 4, pour lequel, en mode de localisation "TDOA 2D mono-récepteur secondaire", un sous pavé $[X_n^j]$ est sélectionné s'il vérifie le critère défini comme suit:

$$- 0 \in J([x^j]) \text{ avec } J([x^j]) = \left[ \frac{[x^j]^2}{[c]^2} - \frac{[y^j]^2}{[d]^2} - 1 \right].$$

7. Procédé selon la revendication 4, pour lequel, en mode de localisation "TOA 3D mono émetteur", un sous pavé $[X_n^j]$ est sélectionné s'il vérifie le critère défini comme suit:

$$- 0 \in J([x^j]) \text{ avec } J([x^j]) = \left[ \frac{[x^j]^2}{[a]^2} + \frac{[y^j]^2}{[b]^2} + \frac{[z^j]^2}{[b]^2} - 1 \right]$$

8. Procédé selon la revendication 4, pour lequel, en mode de localisation "TDOA 3D mono-récepteur secondaire", un sous pavé $[X_n^j]$ est sélectionné si au moins un de ses points vérifie le critère défini comme suit:

$$- 0 \in J\left(\left[x^j\right]\right) \text{ avec } J\left(\left[x^j\right]\right) = \left[ \frac{\left[x^j\right]^2}{\left[c\right]^2} - \frac{\left[y^j\right]^2}{\left[d\right]^2} - \frac{\left[z^j\right]^2}{\left[d\right]^2} - 1 \right].$$

**9.** Procédé selon la revendication 4, pour lequel, en mode de localisation "TOA multi-émetteurs" ou en mode de localisation "TDOA multi-récepteurs secondaire", un sous pavé $[X_n^j]$ est sélectionné s'il vérifie le critère A défini par la relation :

$$- A = \sum_{j=1}^{N} a_j = N$$

dans laquelle N représente le nombre d'émetteurs ou de récepteurs secondaires constituant le système de localisation TOA ou TDOA considéré et dans laquelle les termes $a_j$ sont définis comme suit:

$$a_1 = \begin{cases} 1 \text{ si } 0 \in J_1([X]) \\ 0 \text{ sinon} \end{cases},$$

$$a_2 = \begin{cases} 1 \text{ si } 0 \in J_2([X]) \\ 0 \text{ sinon} \end{cases},$$

.......

$$a_N = \begin{cases} 1 \text{ si } 0 \in J_N([X]) \\ 0 \text{ sinon} \end{cases},$$

Où $J_j([X])$ représente pour chaque système unitaire "mono-émetteur" $(R_x, T_{xj})$ ou "mono-récepteur secondaire" $(R_x, R_{xj})$, la grandeur définie par:

$$- J\left(\left[x^j\right]\right) = \left[ \frac{\left[x^j\right]^2}{\left[a\right]^2} + \frac{\left[y^j\right]^2}{\left[b\right]^2} - 1 \right] \text{ en mode "TOA 2D",}$$

$$- J\left(\left[x^j\right]\right) = \left[ \frac{\left[x^j\right]^2}{\left[a\right]^2} + \frac{\left[y^j\right]^2}{\left[b\right]^2} + \frac{\left[z^j\right]^2}{\left[b\right]^2} - 1 \right] \text{ en mode "TOA 3D",}$$

$$- J\left(\left[x^j\right]\right) = \left[ \frac{\left[x^j\right]^2}{\left[c\right]^2} - \frac{\left[y^j\right]^2}{\left[d\right]^2} - 1 \right] \text{ en mode "TDOA 2D",}$$

$$- J\left(\left[x^j\right]\right) = \left[\frac{\left[x^j\right]^2}{\left[c\right]^2} - \frac{\left[y^j\right]^2}{\left[d\right]^2} - \frac{\left[z^j\right]^2}{\left[d\right]^2} - 1\right] \text{ en mode "TDOA 3D".}$$

**10.** Procédé selon la revendication 4, pour lequel, en mode de localisation "TOA multi-émetteurs" ou en mode de localisation "TDOA multi-récepteurs secondaire", pour un nombre N d'émetteurs ou de récepteurs secondaires constituant le système de localisation TOA ou TDOA considéré, un sous pavé $[X_n^j]$ est sélectionné s'il vérifie le critère A défini par la relation :

$$- A = \sum_{j=1}^{N} a_j \geq \dot{M}$$

dans laquelle M représente un nombre déterminé, inférieur à N, d'émetteurs ou de récepteurs secondaires constituant le système de localisation TOA ou TDOA considéré et dans laquelle les termes $a_j$ sont définis comme suit:

$$a_1 = \begin{cases} 1 \text{ si } 0 \in J_1([X]) \\ 0 \text{ sinon} \end{cases},$$

$$a_2 = \begin{cases} 1 \text{ si } 0 \in J_2([X]) \\ 0 \text{ sinon} \end{cases},$$

.......

$$a_N = \begin{cases} 1 \text{ si } 0 \in J_N([X]) \\ 0 \text{ sinon} \end{cases},$$

Où $J_j([X])$ représente pour chaque système unitaire "mono-émetteur" ($R_x$, $T_{xj}$) ou "mono-récepteur secondaire" ($R_x$, $R_{xj}$), la grandeur définie par:

$$- J\left(\left[x^j\right]\right) = \left[\frac{\left[x^j\right]^2}{\left[a\right]^2} + \frac{\left[y^j\right]^2}{\left[b\right]^2} - 1\right] \text{ en mode "TOA 2D",}$$

$$- J\left(\left[x^j\right]\right) = \left[\frac{\left[x^j\right]^2}{\left[a\right]^2} + \frac{\left[y^j\right]^2}{\left[b\right]^2} + \frac{\left[z^j\right]^2}{\left[b\right]^2} - 1\right] \text{ en mode "TOA 3D",}$$

$$- J([X^j]) = \left[ \frac{[x^j]^2}{[c]^2} - \frac{[y^j]^2}{[d]^2} - 1 \right] \text{ en mode "TDOA 2D",}$$

$$- J([X^j]) = \left[ \frac{[x^j]^2}{[c]^2} - \frac{[y^j]^2}{[d]^2} - \frac{[z^j]^2}{[d]^2} - 1 \right] \text{ en mode "TDOA 3D".}$$

**11.** Application du procédé selon la revendication 9 ou 10 à la localisation passive d'une cible par un système global constitué de systèmes unitaires "mono-émetteur" et "mono-récepteur secondaire" et fonctionnant dans un mode mixte TOA/TDOA.

**Claims**

**1.** A process for passive localisation of a target in TOA or TDOA mode which divides the space in which the localisation zone is located into tiles and searches within each tile for the presence of points belonging to the localisation zone in question,
**characterised in that** the division and the search are performed by iterative steps on a selection of candidate tiles, modified iteration by iteration, so that during each iteration a search is performed among tiles from the selection obtained on completion of the previous iteration, for tiles containing at least one point belonging to the localisation zone with the tiles which do not contain any points being subsequently excluded from the selection, whilst the tiles containing at least one point are re-divided into sub-tiles and are replaced in the selection by the sub-tiles thus created with the selection obtained during each iteration defining the localisation zone with an accuracy which increases with each iteration.

**2.** The process according to claim 1, further including an initialisation step wherein a first tile $[X_0]$ is defined which corresponds to a previous search area, this tile constituting the initial selection.

**3.** The process according to any one of claims 1 to 2, wherein the iterations are interrupted when the sub-tiles forming the selection define the localisation zone with the required resolution.

**4.** The process according to any one of the previous claims, **characterised in that** it includes:

- an initialisation step (71) wherein a first tile $[X_0]$ is defined which corresponds to a previous search area and which results in the constitution of an initial list $L_0^0$ formed from the tile $[X_0]$,
- an iterative step (72) consisting in:
- dividing (73) each tile $[X_n]$ in the current list $L_0^{i-1}$ into four contiguous sub-tiles $[X_n^1]$, $[X_n^2]$, $[X_n^3]$ and $[X_n^4]$;
- finding and selecting (73), from the sub-tiles thus constituted, those tiles which contain at least one point which belongs to the localisation zone;
- updating (73) the current list to obtain a list $L_0^i$ wherein:
- the tiles $[X_n]$ in which a sub-tile has not been selected are suppressed;
- the other tiles are replaced by the selected sub-tiles $[X_n^j]$;

the iterative step including a test (75) for comparing the resolution $\Delta^{Li0(1)}$ of the tiles constituting the list $L_0^i$, the process being interrupted when the resolution $\Delta^{Li0(1)}$ is higher than the required resolution $\Delta^{obj}$.

**5.** The process according to claim 4, wherein, in the "TOA 2D mono-emitter" localisation mode, a sub-tile $[X_n^j]$ is selected if it fulfils the criterion defined by:

$$- \; 0 \in J([x^i]) \; \text{with} \; J([x^i]) = \left[ \frac{[x^i]^2}{[a]^2} + \frac{[y^i]^2}{[b]^2} - 1 \right].$$

6. The process according to claim 4, wherein, in "TOA 2D secondary mono-receiver" localisation mode, a sub-tile $[X_n^i]$ is selected if it fulfils the criterion defined as follows:

$$- \; 0 \in J([x^i]) \; \text{with} \; J([x^i]) = \left[ \frac{[x^i]^2}{[c]^2} - \frac{[y^i]^2}{[d]^2} - 1 \right].$$

7. The process according to claim 4, wherein, in "TOA 3D mono-emitter" localisation mode, a sub-tile $[X_n^i]$ is selected if it fulfils the criterion defined as follows:

$$- \; 0 \in J([x^i]) \; \text{with} \; J([x^i]) = \left[ \frac{[x^i]^2}{[a]^2} + \frac{[y^i]^2}{[b]^2} + \frac{[z^i]^2}{[b]^2} - 1 \right]$$

8. The process according to claim 4, wherein, in "TOA 3D secondary mono-receiver" localisation mode, a sub-tile $[X_n^i]$ is selected if at least one of its points fulfils the criterion defined as follows:

$$- \; 0 \in J([x^i]) \; \text{with} \; J([x^i]) = \left[ \frac{[x^i]^2}{[c]^2} - \frac{[y^i]^2}{[d]^2} - \frac{[z^i]^2}{[d]^2} - 1 \right].$$

9. The process according to claim 4, wherein, in "TOA multi-emitters" localisation mode or in "TDOA secondary multi-receivers" localisation mode, a sub-tile $[X_n^i]$ is selected if it fulfils criterion A defined by the relation:

$$- A = \sum_{j=1}^{N} a_j = N$$

wherein N represents the number of emitters or secondary receivers constituting the relevant TOA or TDOA localisation system and wherein the terms $a_j$ are defined as follows:

$$a_1 = \begin{cases} 1 \; \text{if} \; 0 \in J_1([X]) \\ 0 \; \text{otherwise} \end{cases},$$

$$a_2 = \begin{cases} 1 \; \text{if} \; 0 \in J_2([X]) \\ 0 \; \text{otherwise} \end{cases},$$

........

$$a_N = \begin{cases} 1 \; \text{if} \; 0 \in J_N([X]) \\ 0 \; \text{otherwise} \end{cases},$$

where $J_j([X])$ represents for each individual "mono-emitter" $(R_x, T_{xj})$ or "secondary mono-receiver" $(R_x, R_{xj})$ system, the value being defined by:

$$- J([x^i]) = \left[ \frac{[x^i]^2}{[a]^2} + \frac{[y^i]^2}{[b]^2} - 1 \right] \text{ in "TOA 2D" mode;}$$

$$- J([x^i]) = \left[ \frac{[x^i]^2}{[a]^2} + \frac{[y^i]^2}{[b]^2} + \frac{[z^i]^2}{[b]^2} - 1 \right] \text{ in "TOA 3D" mode;}$$

$$- J([x^i]) = \left[ \frac{[x^i]^2}{[c]^2} - \frac{[y^i]^2}{[d]^2} - 1 \right] \text{ in "TDOA 2D" mode;}$$

$$- J([x^i]) = \left[ \frac{[x^i]^2}{[c]^2} - \frac{[y^i]^2}{[d]^2} - \frac{[z^i]^2}{[d]^2} - 1 \right] \text{ in "TDOA 3D" mode.}$$

10. The process according to claim 4, wherein, in "TOA multi-emitters" localisation mode or "TDOA secondary multi-receivers" localisation mode, for a number N of emitters or secondary receivers constituting the relevant TOA or TDOA localisation system, a sub-tile $[X_n^j]$ is selected if it fulfils the criterion A defined by the relation:

$$- A = \sum_{j=1}^{N} a_j \geq M$$

wherein M represents a predetermined number, smaller than N, of emitters or secondary receivers constituting the relevant TOA or TDOA localisation system and wherein terms $a_j$ are defined as follows:

$$a_1 = \begin{cases} 1 \text{ if } 0 \in J_1([X]) \\ 0 \text{ otherwise} \end{cases},$$

$$a_2 = \begin{cases} 1 \text{ if } 0 \in J_2([X]) \\ 0 \text{ otherwise} \end{cases},$$

$$\ldots\ldots$$

$$a_N = \begin{cases} 1 \text{ if } 0 \in J_N([X]) \\ 0 \text{ otherwise} \end{cases},$$

where $J_j([X])$ represents for each individual "mono-emitter" $(R_x, T_{xj})$ or "secondary mono-receiver" $(R_x, R_{xj})$ system, the value being defined by:

$$- J\!\left(\left[X^{j}\right]\right) = \left[\frac{\left[x^{j}\right]^{2}}{\left[a\right]^{2}} + \frac{\left[y^{j}\right]^{2}}{\left[b\right]^{2}} - 1\right] \quad \text{in "TOA 2D" mode;}$$

$$- J\!\left(\left[X^{j}\right]\right) = \left[\frac{\left[x^{j}\right]^{2}}{\left[a\right]^{2}} + \frac{\left[y^{j}\right]^{2}}{\left[b\right]^{2}} + \frac{\left[z^{j}\right]^{2}}{\left[b\right]^{2}} - 1\right] \quad \text{in "TOA 3D" mode;}$$

$$- J\!\left(\left[X^{j}\right]\right) = \left[\frac{\left[x^{j}\right]^{2}}{\left[c\right]^{2}} - \frac{\left[y^{j}\right]^{2}}{\left[d\right]^{2}} - 1\right] \quad \text{in "TDOA 2D" mode;}$$

$$- J\!\left(\left[X^{j}\right]\right) = \left[\frac{\left[x^{j}\right]^{2}}{\left[c\right]^{2}} - \frac{\left[y^{j}\right]^{2}}{\left[d\right]^{2}} - \frac{\left[z^{j}\right]^{2}}{\left[d\right]^{2}} - 1\right] \quad \text{in "TDOA 3D" mode.}$$

11. The application of the process according to claim 9 or 10 to the passive localisation of a target by a global system constituted by individual "mono-emitter" and "secondary mono-receiver" systems and operating in a mixed TOA/TDOA mode.

**Patentansprüche**

1. Verfahren zur passiven Lokalisierung eines Ziels im TOA- oder TDOA-Modus, das den Raum, in dem sich die Lokalisierungszone befindet, in Fliesen unterteilt und im Inneren jeder Fliese nach der Anwesenheit von Punkten sucht, die zu dieser betrachteten Lokalisierungszone gehören,
**dadurch gekennzeichnet, dass** die Unterteilung und die Suche durch iterative Schritte an einer Auswahl von Fliesenkandidaten erfolgen, die von Iteration zu Iteration modifiziert wird, so dass bei jeder Iteration unter den Fliesen aus dieser nach der vorherigen Iteration erhaltenen Auswahl eine Suche nach denjenigen Fliesen durchgeführt wird, die wenigstens einen Punkt enthalten, der zu der Lokalisierungszone gehört, wobei die Fliesen, die keinen Punkt enthalten, nachfolgend von der Auswahl ausgeschlossen werden, während die Fliesen, die wenigstens einen Punkt enthalten, erneut in Subfliesen unterteilt und bei der Auswahl durch die so erzeugten Subfliesen ersetzt werden, wobei die bei jeder Iteration erhaltene Auswahl die Lokalisierungszone bei jeder Iteration mit zunehmender Genauigkeit definiert.

2. Verfahren nach Anspruch 1, das ferner einen Initialisierungsschritt beinhaltet, bei dem eine erste Fliese $[X_0]$ definiert wird, die einem vorherigen Suchraum entspricht, wobei diese Fliese die erste Auswahl darstellt.

3. Verfahren nach Anspruch 1 oder 2, wobei die Iterationen unterbrochen werden, wenn die die Auswahl bildenden Subfliesen die Lokalisierungszone mit der gewünschten Auflösung definieren.

4. Verfahren nach einem der vorherigen Ansprüche, **dadurch gekennzeichnet, dass** es Folgendes beinhaltet:

- einen Initialisierungsschritt (71), bei dem eine erste Fliese $[X_0]$ definiert wird, die einem vorherigen Suchraum entspricht, und der zur Bildung einer anfänglichen Liste $L_0^0$ führt, die von der Fliese $[X_0]$ gebildet wird,
- einen iterativen Schritt (72), der aus Folgendem besteht:
- Unterteilen (73) jeder Fliese $[X_n]$ in der aktuellen Liste $L_0^{i-1}$ in vier aneinander grenzende Subfliesen $[X_n^1]$, $[X_n^2]$, $[X_n^3]$ und $[X_n^4]$;
- Suchen und Auswählen (73), aus den so gebildeten Subfliesen, der Fliesen, die wenigstens einen Punkt enthalten, der Teil der Lokalisierungszone ist;
- Aktualisieren (73) der aktuellen Liste, um eine Liste $L_0{}^1$ zu erhalten, bei der:
- die Fliesen $[X_n]$, in denen keine Subfliese gewählt wurde, unterdrückt sind;
- die anderen Fliesen durch die gewählten Subfliesen $[X_n{}^j]$ ersetzt werden; wobei der iterative Schritt einen Test (75) zum Vergleichen der Auflösung $\Delta^{Lio(1)}$ der die Liste $L_0{}^i$ bildenden Fliesen beinhaltet, wobei der Vorgang unterbrochen wird, wenn die Auflösung $\Delta^{Lio(1)}$ höher ist als die gewünschte Auflösung $\Delta^{obj}$.

5. Verfahren nach Anspruch 4, wobei im Lokalisierungsmodus "TOA-2D-Monoemitter" eine Subfliese $[X_n{}^j]$ gewählt wird, wenn sie das wie folgt definierte Kriterium erfüllt:

$$- 0 \in J([X^j]) \text{ wobei } J([X^j]) = \left[ \frac{[x^j]^2}{[a]^2} + \frac{[y^j]^2}{[b]^2} - 1 \right].$$

6. Verfahren nach Anspruch 4, wobei im Lokalisierungsmodus "TDOA 2D sekundärer Monoempfänger" eine Subfliese $[X_n{}^j]$ gewählt wird, wenn sie das wie folgt definierte Kriterium erfüllt:

$$- 0 \in J([X^j]) \text{ wobei } J([X^j]) = \left[ \frac{[x^j]^2}{[c]^2} - \frac{[y^j]^2}{[d]^2} - 1 \right].$$

7. Verfahren nach Anspruch 4, wobei im Lokalisierungsmodus "TOA 3D Monoemitter" eine Subfliese $[X_n{}^j]$ gewählt wird, wenn sie das wie folgt definierte Kriterium erfüllt:

$$-0 \in J([X^j]) \text{ wobei } J([X^j]) = \left[ \frac{[x^j]^2}{[a]^2} + \frac{[y^j]^2}{[b]^2} + \frac{[z^j]^2}{[b]^2} - 1 \right]$$

8. Verfahren nach Anspruch 4, wobei im Lokalisierungsmodus "TDOA 3D sekundärer Monoempfänger" eine Subfliese $[X_n{}^j]$ gewählt wird, wenn wenigstens einer ihrer Punkte das wie folgt definierte Kriterium erfüllt:

$$-0 \in J([X^j]) \text{ wobei } J([X^j]) = \left[ \frac{[x^j]^2}{[c]^2} - \frac{[y^j]^2}{[d]^2} - \frac{[z^j]^2}{[d]^2} - 1 \right].$$

9. Verfahren nach Anspruch 4, wobei im Lokalisierungsmodus "TOA Multiemitter" oder im Lokalisierungsmodus "TDOA sekundäre Multiempfänger" eine Subfliese $[X_n{}^j]$ gewählt wird, wenn sie Kriterium A erfüllt, das durch die folgende Relation definiert wird:

$$- A = \sum_{j=1}^{N} a_j = N$$

wobei N die Anzahl von Emittern oder sekundären Empfängern repräsentiert, die das betrachtete TOA- oder TDOA-Lokalisierungssystem bilden, und wobei die Ausdrücke $a_j$ wie folgt definiert sind:

$$a_1 = \begin{cases} 1 \text{ wenn } 0 \in J_1([X]) \\ 0 \text{ sonst} \end{cases},$$

$$a_2 = \begin{cases} 1 \text{ wenn } 0 \in J_2([X]) \\ 0 \text{ sonst} \end{cases},$$

$$\ldots\ldots$$

$$a_N = \begin{cases} 1 \text{ wenn } 0 \in J_N([X]) \\ 0 \text{ sonst} \end{cases},$$

wobei $J_j([X])$ für jedes einzelne System "Monoemitter" $(R_x, T_{xj})$ oder "sekundärer Monoempfänger" $(R_x, R_{xj})$ repräsentiert, wobei der Wert definiert ist durch:

$$- J([x^j]) = \left[ \frac{[x^j]^2}{[a]^2} + \frac{[y^j]^2}{[b]^2} - 1 \right] \quad \text{im "TOA 2D" Modus;}$$

$$- J([x^j]) = \left[ \frac{[x^j]^2}{[a]^2} + \frac{[y^j]^2}{[b]^2} + \frac{[z^j]^2}{[b]^2} - 1 \right] \quad \text{im "TOA 3D" Modus;}$$

$$- J([x^j]) = \left[ \frac{[x^j]^2}{[c]^2} - \frac{[y^j]^2}{[d]^2} - 1 \right] \quad \text{im "TDOA 2D" Modus;}$$

$$- J([x^j]) = \left[ \frac{[x^j]^2}{[c]^2} - \frac{[y^j]^2}{[d]^2} - \frac{[z^j]^2}{[d]^2} - 1 \right] \quad \text{im "TDOA 3D" Modus.}$$

**10.** Verfahren nach Anspruch 4, wobei im Lokalisierungsmodus "TOA Multiemitter" oder im Lokalisierungsmodus "TDOA sekundäre Multiempfänger" für eine Anzahl N von Emittern oder sekundären Empfängern, die das betrachtete TOA- oder TDOA-Lokalisierungssystem bilden, eine Subfliese $[X_n^j]$ gewählt wird, wenn sie das Kriterium A erfüllt, das durch die folgende Relation definiert wird:

$$- A = \sum_{j=1}^{N} a_j \geq M$$

wobei M eine bestimmte Zahl kleiner als N von Emittern oder sekundären Empfängern repräsentiert, die das betrachtete TOA- oder TDOA-Lokalisierungssystem bilden, und wobei die Ausdrückte $a_j$ wie folgt definiert sind:

$$a_1 = \begin{cases} 1 \text{ wenn } 0 \in J_1([X]) \\ 0 \text{ sonst} \end{cases},$$

$$a_2 = \begin{cases} 1 & 0 \in J_2([X]) \\ 0 \text{ sonst} \end{cases},$$

$$a_N = \begin{cases} 1 \text{ wenn } 0 \in J_N([X]) \\ 0 \text{ sonst} \end{cases},$$

wobei $J_j([X])$ für jedes einzelne System "Monoemitter" ($R_x$, $T_{xj}$) oder

$$- \ J([x^j]) = \left[ \frac{[x^j]^2}{[a]^2} + \frac{[y^j]^2}{[b]^2} - 1 \right] \quad \text{im "TOA 2D" Modus:}$$

$$- \ J([x^j]) = \left[ \frac{[x^j]^2}{[c]^2} - \frac{[y^j]^2}{[d]^2} - 1 \right] \quad \text{im "TDOA 2D" Modus;}$$

$$- \ J([x^j]) = \left[ \frac{[x^j]^2}{[c]^2} - \frac{[y^j]^2}{[d]^2} - \frac{[z^j]^2}{[d]^2} - 1 \right] \quad \text{im "TDOA 3D" Modus.}$$

**11.** Anwendung des Verfahrens nach Anspruch 9 oder 10 auf die passive Lokalisierung eines Ziels durch ein globales System, das von einzelnen "Monoemitter" und "sekundärer Monoempfänger" Systemen gebildet wird und in einem TOA/TDOA-Mischmodus arbeitet.

FIG.1

FIG.3

FIG.2

FIG.4

FIG.5

FIG.6

Début

Initialisation:

$$[x_0] = [x_0] \cdot [y_0]$$

$$\Delta^{obj} = (\Delta^x, \Delta^y)$$

$$L_0 = \{[X_0^1], [X_0^2], ..., [X_0^N]\}$$

— 71

Itération:

Décomposition de $[X_n]$

— 73

Détermination de $L_1([X_n^i])$ — 74

Mise à jour de $L_0$ avec $L_1$

~ 72

Test d'Arrêt:

Détermination de $\Delta^{L_0}$

$$\Delta^{L_0} \leq \Delta^{obj} \ ?$$

— 75

Oui

Non

Fin

FIG.7

FIG.8

FIG.9

FIG.10

FIG.11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2003176196 A